# EUROPÄISCHE PATENTSCHRIFT

(11) **EP 0 472 813 B1**
(45) Veröffentlichungstag und Bekanntmachung des Hinweises auf die Patenterteilung: **16.12.1998**
(21) Anmeldenummer: 91107093.6
(22) Anmeldetag: 02.05.1991
(51) Int. Cl.: G06F 9/445

(54) **Verfahren zum Aendern eines in einer Computeranordnung eines Gerätes gespeicherten Computerprogramms in ein geändertes Computerprogramm und Anordnung zum Durchführen des Verfahrens**
Method to change a computer program stored in the computer arrangement of an appliance, and arrangement for the carrying out of this method
Méthode pour changer le code programme mémorisé dans un système d'ordinateur d'un dispositif et système pour la mise en oeuvre de la méthode

(30) Priorität: 28.08.1990 CH 2794/90
(43) Veröffentlichungstag der Anmeldung: 04.03.1992
(73) Patentinhaber: Landis & Gyr Technology Innovation AG, 6301 Zug (CH)
(72) Erfinder: Rueff, Joseph, CH-1232 Lully (CH)

(56) Entgegenhaltungen:
- EP-A- 0 194 822
- EP-A- 0 323 707
- WO-A-83/01847
- PATENT ABSTRACTS OF JAPAN vol. 8, no. 141 (P-283)(1578) 30. Juni 1984 & JP-A-59 41 030 (NIPPON DENKI K.K. ) 7. März 1984

## Beschreibung

Die Erfindung bezieht sich auf ein Verfahren zum Ändern eines in einer Computeranordnung eines Gerätes gespeicherten Computerprogramms in ein geändertes Computerprogramm gemäss dem Oberbegriff des Anspruchs 1 und auf eine Anordnung zum Durchführen des Verfahrens.

Solche Verfahren und Anordnungen werden zum zentralen Verwalten des Änderungsdienstes von in technischen Geräten eingesetzten Computerprogrammen verwendet, welche letztere in der Regel im Laufe der Zeit öfters geändert werden müssen, um sie neuen Geräteanforderungen anzupassen. Die Geräte sind z. B. Telefonkassierstationen eines öffentlichen Telefonnetzes, in denen z. B. öfters bisher verwendete Taxationsverfahren geändert oder neue Dienstleistungen angeboten werden müssen.

Während die Aenderungen dem Gerätehersteller bei der Installation neuer Geräte in der Regel keine grosse Schwierigkeiten bereiten, stellen sie für die bereits im Einsatz befindlichen Geräte in der Regel ein erhebliches Problem dar, da diese wegen ihrer grossen Zahl und wegen den grossen Entfernungen zwischen den Geräten nicht vor Ort, sondern idealerweise zentral und fern von einer Zentraleinheit aus, z. B. über ein Telefonnetz, neu programmiert werden sollten. Eine vollständige Übertragung des neu geltenden, in einer Maschinensprache abgefassten Programms von der Zentraleinheit zum Gerät benötigt dabei jedoch eine unzulässig lange Übertragungszeit, welche unbedingt zu vermeiden ist, da während dieser Zeit der normale Nutzbetrieb des Gerätes, z. B. das Führen von Telefongesprächen, nicht durchgeführt werden kann.

Der Erfindung liegt die Aufgabe zugrunde, ein Verfahren und eine Anordnung der eingangs genannten Art zu verwirklichen, mit denen von einer Zentraleinheit aus eine zentrale Änderung in einer Hochsprache der in den Geräten gespeicherten Computerprogramme möglich ist, ohne dass dabei unzulässig lange Übertragungszeiten zwischen der Zentraleinheit und den Geräten erforderlich sind und ohne dass dabei der Ueberblick über die verschiedenen, sich im Betrieb befindlichen Programmvarianten sowie die Aktualität der Programmdokumentation verloren geht.

Die genannte Aufgabe wird erfindungsgemäss durch die im Anspruch 1 (Verfahren) bzw. Anspruch 6 (Anordnung) angegebenen Merkmale gelöst.

Vorteilhafte Ausgestaltungen der Erfindung ergeben sich aus den Unteransprüchen. Ein Ausführungsbeispiel der Erfindung ist in der Zeichnung dargestellt und wird im folgenden näher beschrieben.

Es zeigen:
- Fig. 1: ein Blockschaltbild eines Übertragungssystems und
- Fig. 2: ein Blockschaltbild einer Computeranordnung.

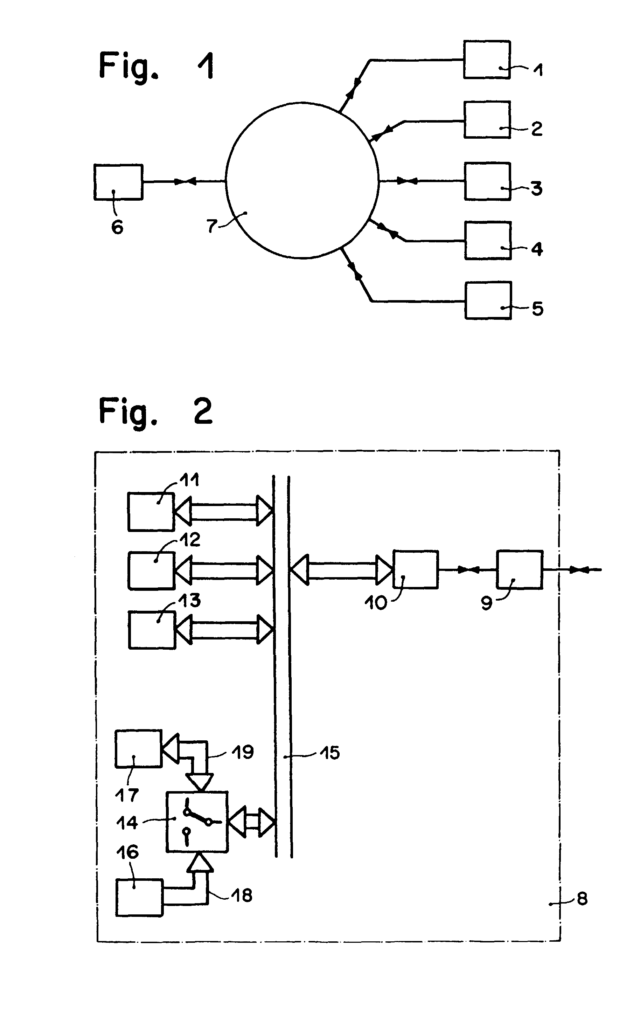

Das in der Fig. 1 dargestellte Übertragungssystem enthält mehrere, z. B. fünf Geräte 1, 2, 3, 4 und 5 sowie eine gemeinsame Zentraleinheit 6, die alle nah oder fern räumlich verteilt angeordnet sind. Die Zentraleinheit 6 ist über ein Übertragungsnetz 7, vorzugsweise ein Telefonnetz, mit den Geräten 1 bis 5 verbunden. Übertragungssignale werden zwischen der Zentraleinheit 6 und den Geräten 1 bis 5 in beiden Übertragungsrichtungen übertragen. Falls die Übertragungssignale über grössere Entfernungen übertragen werden müssen, sind sie vorzugsweise modulierte Signale und werden dann als amplituden-, frequenz- oder phasenmodulierte Signale übertragen. Nachfolgend gilt die Annahme, dass die Übertragungssignale modulierte Signale sind. Wenn die Geräte 1 bis 5 moderne Telefonkassierstationen sind, dann ist die Zentraleinheit 6 eine gemeinsame Telefonzentrale und das Übertragungsnetz 7 das Telefonnetz.

Die Geräte 1 bis 5 enthalten je eine Computeranordnung 8, die vorzugsweise einen Mikrocomputer aufweist und deren prinzipieller Aufbau in der Fig. 2 vereinfacht dargestellt ist für den Fall, dass die Übertragungssignale modulierte Signale sind. Auch die Zentraleinheit 6 enthält eine ähnlich aufgebaute Computeranordnung. Jede Computeranordnung 8 weist ein Modem 9 (Modulator/Demodulator) auf und enthält ausserdem einen Serie/Parallel-Wandler 10, einen Zentralprozessor 11 (CPU: Central Processor Unit), einen ersten Schreib/Lese-Speicher 12, einen zweiten Schreib/Lese-Speicher 13 und einen Umschalter 14, die über Busverbindungen 15 miteinander verbunden sind. Schliesslich ist in der Computeranordnung 8 noch ein unverlierbarer Speicher 16 und ein dritter Schreib/Lese-Speicher 17 vorhanden, die je über eine Busverbindung 18 bzw. 19 mit einem ersten bzw. zweiten Busanschluss des Umschalters 14 verbunden sind. Die Schreib/Lese-Speicher 12, 13 und 17 sind z. B. je ein RAM (Random Access Memory) oder ein EEPROM (Electrically Erasable Programmable Read Only Memory) und der unverlierbare Speicher 16 ist z. B. ein EPROM (Electrically Programmable Read Only Memory). Die drei Schreib/Lese-Speicher 12, 13 und 17 sind in der Fig. 2 als getrennte Speicher dargestellt, sie können jedoch auch alle drei unterschiedliche Teile eines einzigen gemeinsamen Schreib/Lese-Speichers sein. Alle Busverbindungen 15 sowie die Busverbindung 19 werden in beiden Übertragungsrichtungen betrieben, während die Busverbindung 18 nur in eine vom unverlierbaren Speicher 16 wegweisende Übertragungsrichtung betrieben wird. Ein serieller Eingang/Ausgang des Serie/Parallel-Wandlers 10 ist mit einem ersten Anschluss des Modems 9 verbunden, während ein Parallel-Eingang/Ausgang des Serie/Parallel-Wandlers 10 an die Busverbindungen 15 angeschlossen ist. Ein zweiter Anschluss des Modems 9 bildet einen Eingang/Ausgang der Computeranordnung 8 und ist - nicht dargestellt - mit dem Übertragungsnetz 7 verbunden.

Die Computerprogramme dienen alle dem Betrieb der Computeranordnungen 8 der verschieden Geräte 1 bis 5 und können zu einem gegebenen Zeitpunkt trotz Identität der Geräte 1 bis 5 für diese alle unterschiedlich sein. Ausserdem können diese Computerprogramme im Laufe der Zeit auf unterschiedliche Weise geändert werden. Der Änderungsdienst des Computerprogramms eines jeden der Geräte 1 bis 5 wird vorzugsweise durch die Zentraleinheit 6 zentral verwaltet, vor allem wenn viele Geräte vorhanden sind und/oder die Geräte räumlich sehr entfernt voneinander angeordnet sind, wie z. B. in einem Netz von Telefonkassierstationen. Die Computeranordnung 8 eines jeden der Geräte 1 bis 5 wird nachfolgend immer mit demjenigen in einer Maschinensprache abgefassten Computerprogramm betrieben, welches gerade im Augenblick im Schreib/Lese-Speicher 17 der Computeranordnung 8 des betreffenden Gerätes gespeichert ist.

Zu Beginn, bei der Installation der Zentraleinheit 6 und einer gewissen Anzahl der Geräte 1 bis 5, ist ein in der Maschinensprache abgefasstes erstes ursprüngliches Computerprogramm X₀, auch Basis-Programm genannt, unverlierbar und auch unveränderbar im unverlierbaren Speicher 16 der Computeranordnung 8 der betreffenden Geräte gespeichert. Das Basis-Programm X₀ ist für die betreffenden Geräte eine Art erstes Vater-Programm. Das erste ursprüngliche Computerprogramm X₀ wird anschliessend für ein jedes der betreffenden Geräte bei einer ersten Inbetriebnahme derselben unter Anleitung des Zentralprozessors 11 der Computeranordnung 8 des betreffenden Gerätes automatisch aus dem unverlierbaren Speicher 16 über den Umschalter 14 dem als Zwischenspeicher funktionierenden Schreib/Lese-Speicher 12 zugeführt und dort abgespeichert, um anschliessend vom letzteren über den nun umgeschalteten Umschalter 14 dem Schreib/Lese-Speicher 17 der Computeranordnung 8 des betreffenden Gerätes zwecks dortiger Speicherung zugeführt zu werden. Das erste ursprüngliche Computerprogramm X₀ bleibt im Schreib/Lese-Speicher 17 dann solange gespeichert und die zugehörige Computeranordnung 8 wird entsprechend solange mit diesem Computerprogramm betrieben, bis dass das erste ursprüngliche Computerprogramm X₀ bei einer ersten nachfolgenden Computerprogramm-Änderung des betreffenden Gerätes in ein Computerprogramm X₁ geändert wird.

Nach der ersten Inbetriebnahme eines jeden der bereits installierten Geräte ist somit das in der Maschinensprache abgefasste erste ursprüngliche Computerprogram X₀ einerseits unveränderbar im unverlierbaren Speicher 16 und andererseits veränderbar im Schreib/Lese-Speicher 17 der Computeranordnung 8 der betreffenden Geräte gespeichert.

Der Inhalt des Schreib/Lese-Speichers 13 dient dabei im betreffenden Gerät dazu, den Umschalter 14 im richtigen Zeitpunkt umzuschalten und der Computeranordnung 8 gleichzeitig anzuzeigen, welche Position der Umschalter 14 gerade einnimmt, so dass die Computeranordnung 8 weiss, mit welchem der beiden Speicher 16 oder 17 sie gerade zusammenzuarbeiten hat. In einer Position des Umschalters 14 ist der unverlierbare Speicher 16 über die Busverbindung 18, den Umschalter 14 und die Busverbindungen 15 mit den Schreib/Lese-Speichern 12 und 13 verbunden, während in der anderen Position des Umschalters 14 der Schreib/Lese-Speicher 17 über die Busverbindung 19, den Umschalter 14 und die Busverbindungen 15 mit den Schreib/Lese-Speichern 12 und 13 verbunden ist. Nach der ersten Inbetriebnahme nimmt der Umschalter 14 im betreffenden Gerät jeweils die letztere Position ein und behält in der Regel diese Position für den weiteren Betrieb des betreffenden Gerätes bei, so dass, wie bereits erwähnt, dessen Computeranordnung 8 immer mit dem im Schreib/Lese-Speicher 17 gespeicherten Computerprogramm betrieben wird. Erst wenn im Laufe der Zeit aus irgend einem Grund, z. B. einem Speisespannungsausfall, der Speicherinhalt des Schreib/Lese-Speichers 17 verloren geht, muss der Umschalter 14 wieder auf den unverlierbaren Speicher 16 zurückgeschaltet und eine Art neue Inbetriebnahme simuliert werden, um den Speicherinhalt des unverlierbaren Speichers 16 wieder in den nun leeren Schreib/Lese-Speicher 17 zu übernehmen. Anschliessend wird dann die zugehörige Computeranordnung 8 vorübergehend wieder mit dem ersten ursprünglichen Computerprogramm X₀ betrieben bis zu dem Augenblick, an dem der zentrale Änderungsdienst das im Schreib/Lese-Speicher 17 gespeicherte Computerpogramm wieder auf den neuesten Stand bringen kann.

Im Laufe der Zeit können neue zusätzliche Geräte installiert werden, die ein gleiches oder ein anderes Basis-Programm besitzen, welches letzteres jedoch immer vom zuerst installierten Basis-Programm X₀ mittels mindestens einer Änderung abgeleitet ist und somit eine Art Sohn-Programm desselben darstellt, während es selber im betreffenden Gerät ein Vater-Programm für ein erstes nachfolgend erzeugtes geändertes Computerprogramm ist.

Ausserdem können im Laufe der Zeit von der Zentraleinheit 6 aus die Basis-Programme aller Geräte 1 bis 5 zu verschiedenen Zeitpunkten unterschiedlich geändert werden, so dass zu einem gewissen Zeitpunkt im Schreib/Lese-Speicher 17 der Computeranordnung 8 der Geräte 1 bis 5 gleiche oder unterschiedliche Computerprogramme gespeichert sind, die alle geänderte Computerprogramme sein können, die durch Änderung vom ersten ursprünglichen Computerprogramm X₀ abgeleitet sind. Jedes dieser Programme kann im betreffenden Gerät ein Vater-Programm für ein erstes, nachfolgend durch Änderung vom Vater-Programm abgeleitetes Sohn-Programm des Gerätes sein.

Im Schreib/Lese-Speicher 17 des Gerätes 1 ist z. B. zu einem bestimmten Zeitpunkt ein in der Maschinensprache abgefasstes Computerprogramm X₁ des Gerätes 1 als dessen Vater-Programm gespeichert, welches ein ebenfalls in der Maschinensprache abgefasstes geändertes Computerprogramm X₂ als Sohn-Programm besitzt. Letzteres wird nach der nächsten, von der Zentraleinheit 6 aus veranlassten Computerprogramm-Änderung anstelle des Computerprogramms X₁ im Schreib/Lese-Speicher 17 des Gerätes 1 abgespeichert. Die beiden Computerprogramme X₁ und X₂ dienen dabei jeweils immer dem Betrieb der Computeranordnung 8 des Gerätes 1. Das geänderte, in der Maschinensprache abgefasste Computerprogramm X₂ ist jeweils ein Resultat einer in einer Hochsprache in der Zentraleinheit 6 durchgeführten Computerprogramm-Änderung und einer nachfolgend durchgeführten Übertragung von Informationen bezüglich der stattgefundenen Änderungen zwischen der Zentraleinheit 6 und dem Gerät 1.

Die beiden in der Maschinensprache abgefassten Computerprogramme X₁ und X₂ entsprechen jeweils in der Computeranordnung 8 der Zentraleinheit 6 einer zugehörigen, in der Zentraleinheit 6 erzeugten Quellenfassung Q₁ bzw. Q₂. Die beiden Quellenfassungen Q₁ und Q₂ sind in einer gleichen Hochsprache abgefasst und werden jeweils zu unterschiedlichen Zeitpunkten mittels der Computeranordnung der Zentraleinheit 6 erzeugt und in das jeweilige zugehörige, in der Maschinensprache abgefasste Computerprogramm X₁ bzw. X₂ umgewandelt, welches dann in einem Schreib/Lese-Speicher der Computeranordnung der Zentraleinheit 6 abgespeichert wird.

Die Zentraleinheit 6 übermittelt dem Gerät 1 entweder periodisch oder bevorzugt auf Anfrage des Gerätes 1 den neuesten Stand des für das Gerät 1 geltenden Computerprogramms. Zu diesem Zweck wartet z. B. die Zentraleinheit 6 auf einen Anruf des Gerätes 1, welches dann Kenndaten, wie z. B. Name und letztes Änderungsdatum, des gerade in ihm abgespeicherten Computerprogramms X₁ ermittelt, die Zentraleinheit 6 anruft und die ermittelten Kenndaten zur letzteren hin überträgt. Anhand der erhaltenen Kenndaten kann die Zentraleinheit 6 erkennen, ob sich die neueste gültige Version des Computerprogramms bereits im Gerät 1 befindet oder nicht. Wenn nicht, dann übermittelt die Zentraleinheit 6 dem Gerät 1 Informationen, aus denen das Gerät 1 dann sein in der Maschinensprache abgefasstes neu geltendes Computerprogramm X₂ rekonstruieren kann.

Die modernen Computerprogramme von Telefonkassierstationen enthalten 40 bis 60 Kilobytes, deren vollständige Übertragung über ein Telefonnetz mit einer Geschwindigkeit von z. B. 1200 Baud pro Sekunde eine unzulässig lange Übertragungszeit benötigen würde, während der die betreffende Telefonkassierstation für Telefongespräche nicht zur Verfügung stände. Zwischen der Zentraleinheit 6 und dem Gerät 1, dessen Computerprogramm geändert werden soll, werden daher zur Übertragungszeitersparnis nur die Differenz zwischen den in der Maschinensprache abgefassten Computerprogrammen X₂ und X₁ sowie Adressen von geänderten Bytes des Computerprogramms X₂ übertragen. Vom Inhalt des geänderten Computerprogramms X₂ werden somit nur alle geänderten Bytes von der Zentraleinheit 6 zum Gerät 1 übertragen, ergänzt durch Informationen bezüglich der Adressen dieser geänderten Bytes. Dadurch wird die Quantität der zu übertragenden Information stark reduziert, da die erwähnte Differenz bedeutend kleiner ist als das gesamte Computerprogramm X₂. Wie diese Differenz und diese Adressen in der Zentraleinheit 6 erzeugt und aufbereitet sowie anschliessend zum Gerät 1 übertragen werden ist ausführlich beschrieben in einer gleichzeitig am 28.08.1990 mit diesem Patent in der Schweiz eingereichten parallelen Patentanmeldung (CH2793/90=EP-0 472 812 A1). Die zu übertragenden Bytes werden bitweise seriell z. B. als modulierte Impulssignale übertragen und nach ihrem Empfang im Gerät 1 zuerst mittels des Modems 9 demoduliert und anschliessend mittels des Serie/Parallel-Wandlers 10 wieder in parallel anstehende Bits umgewandelt, welche dann über die Busverbindungen 15 vorzugsweise dem als Pufferspeicher dienenden Schreib/Lese-Speicher 12 der Computeranordnung 8 des Gerätes 1 zugeführt werden, in dem somit die übertragenen geänderten Bytes des Computerprogramms X₂ und deren mitübertragenen Adressen zwischengespeichert werden.

Im Gerät 1, wo bis zu diesem Augenblick alle Bytes des noch nicht geänderten Computerprogramms X₁ im Schreib/Lese-Speicher 17 der Computeranordnung 8 des Gerätes 1 gespeichert waren, wird dann anschliessend aus der empfangenen Differenz und den empfangenen Adressen der geänderten Bytes das in der Maschinensprache abgefasste, neu geltende geänderte Computerprogramm X₂ rekonstruiert, indem zeitlich nacheinander alle geänderten Bytes unter ihren jeweiligen mitübertragenen Adressen im Schreib/Lese-Speicher 17 der Computeranordnung 8 des Gerätes 1 abgespeichert werden, um dort zusammen mit den bereits im Schreib/Lese-Speicher 17 vorhandenen, unverändert gebliebenen Bytes des Computerprogramms X₁, welche unter ihren jeweiligen bisherigen Adressen gespeichert bleiben, das in der Maschinensprache abgefasste geänderte Computerprogramm X₂ zu bilden.

Das im Schreib/Lese-Speicher 17 schliesslich gespeicherte geänderte Computerprogramm X₂ besteht somit einerseits aus den nicht geänderten und nicht übertragenen Bytes des vorher im Schreib/Lese-Speicher 17 gespeicherten, in der Maschinensprache abgefassten Computerprogramms X₁ und andererseits aus den geänderten, in der Zentraleinheit 6 erzeugten und zum Gerät 1 übertragenen Bytes des in der Maschinensprache abgefassten geänderten Computerprogramms X₂, wobei die geänderten Bytes jeweils unter ihren zugehörigen, mitübertragenen Adressen im Schreib/Lese-Speicher 17 des Gerätes 1 gespeichert sind.

## Patentansprüche

1. Verfahren zum Ändern eines in einer Computeranordnung (8) eines Gerätes (1) gespeicherten Computerprogramms (X₁) in ein geändertes Computerprogramm (X₂), wobei beide Computerprogramme (X₁, X₂) in derselben Maschinensprache abgefasst sind und dem Betrieb der Computeranordnung (8) dienen und wobei jeweils zu unterschiedlichen Zeitpunkten je eine zugehörige Quellenfassung (Q₁ bzw. Q₂) der beiden Computerprogramme (X₁, X₂) in einer Zentraleinheit (6) erzeugt und mittels einer Computeranordnung der Zentraleinheit in das zugehörige in der Maschinensprache abgefasste Computerprogramm (X₁ bzw. X₂) des Gerätes (1) umgewandelt wird, dadurch gekennzeichnet, dass alle Bytes des noch nicht geänderten Computerprogramms (X₁) in einem Schreib/Lese-Speicher (17) der Computeranordnung (8) des Gerätes (1) gespeichert sind, dass vom Inhalt des geänderten Computerprogramms (X₂) nur alle geänderten Bytes von der Zentraleinheit (6) zum Gerät (1) übertragen werden, ergänzt durch Informationen bezüglich der Adressen der geänderten Bytes, und dass die geänderten Bytes im Schreib/Lese-Speicher (17) der Computeranordnung (8) des Gerätes (1) unter ihren jeweiligen mitübertragenen Adressen gespeichert werden, um dort zusammen mit den bereits im Schreib/Lese-Speicher (17) vorhandenen, unverändert gebliebenen Bytes des Computerprogramms (X₁) das in der Maschinensprache abgefasste geänderte Computerprogramm (X₂) zu bilden.

2. Verfahren nach Anspruch 1, dadurch gekennzeichnet, dass die übertragenen geänderten Bytes und deren mitübertragenen Adressen in einem weiteren Schreib/Lese-Speicher (12) der Computeranordnung (8) des Gerätes (1) zwischengespeichert werden, bevor die geänderten Bytes unter ihren jeweiligen Adressen im Schreib/Lese-Speicher (17) der Computeranordnung (8) des Gerätes (1) abgespeichert werden.

3. Verfahren nach Anspruch 1 oder 2, dadurch gekennzeichnet, dass das im Schreib/Lese-Speicher (17) der Computeranordnung (8) des Gerätes (1) gespeicherte Computerprogramm (X₁) bereits ein geändertes Computerprogramm eines ersten ursprünglichen, in der Maschinensprache abgefassten Computerprogramms (X₀) ist.

4. Verfahren nach Anspruch 3, dadurch gekennzeichnet, dass das erste ursprüngliche, in der Maschinensprache abgefasste Computerprogramm (X₀) bei einer Installation des Gerätes (1) in einem unverlierbaren Speicher (16) der Computeranordnung (8) des Gerätes (1) gespeichert ist und anschliessend bei einer ersten Inbetriebnahme des Gerätes (1) in den Schreib/Lese-Speicher (17) der Computeranordnung (8) des Gerätes (1) übernommen wird.

5. Verfahren nach Anspruch 4, dadurch gekennzeichnet, dass bei der ersten Inbetriebnahme des Gerätes (1) unter Anleitung eines Zentralprozessors (11) der Computeranordnung (8) des Gerätes (1) das im unverlierbaren Speicher (16) gespeicherte erste ursprüngliche Computerprogramm (X₀) über einen Umschalter (14) einem weiteren Schreib/Lese-Speicher (12) zugeführt und dort abgespeichert wird, um anschliessend vom weiteren Schreib/Lese-Speicher (12) über den nun umgeschalteten Umschalter (14) dem Schreib/Lese-Speicher (17) der Computeranordnung (8) des Gerätes (1) zwecks dortiger Speicherung zugeführt zu werden.

6. Anordnung zum Durchführen des Verfahrens nach einem der Ansprüche 1 bis 5 bestehend aus einer Zentraleinheit (6), einem Uebertragungsnetz (7) und mehreren, mit der Zentraleinheit (6) bidirektional über das Uebertragungsnetz (7) verbundenen Geräten (1; 2; 3; 4; 5) mit je einer Computeranordnung (8), die mittels Verbindungen (15; 18; 19) verknüpft einen Zentralprozessor (11) und drei Schreib-/Lesespeicher (12; 13; 17) umfasst,
dadurch gekennzeichnet,
dass der dritte Schreib-/Lesespeicher (17) ein für den Betrieb der Computeranordnung (8) verwendetes, in Maschinensprache abgefasstes Computerprogramm (X₁) enthält,
dass die Computeranordnung (8) wenigstens zum Empfang von mittels des Uebertragungsnetzes (7) aus der Zentraleinheit (6) übermittelten Daten und zum Rücksenden von Kenndaten des im dritten Schreib/Lesespeicher (17) abgespeicherten Computerprogramms (X₁) an die Zentraleinheit (6) eingerichtet ist, wobei der erste Schreib-/Lesespeicher (12) wenigstens als Zwischenspeicher für die empfangenen Daten dient,
dass die Zentraleinheit (6) Mittel zum Abfragen der Kenndaten des im dritten Schreib-/Lesespeicher (17) der Geräte (1; 2; 3; 4; 5) verwendeten Computerprogramms (X₁) und Mittel zum Senden der Daten aufweist, wobei die Daten nur geänderte Bytes zwischen dem anhand der Kenndaten festgestellten Computerprogramm (X₁) und dem neu geltenden Computerprogramm (X₂) und Adressen der geänderten Bytes umfassen, und
dass die Computeranordnung (8) nach dem Empfang der Daten und nach dem Einsetzen der geänderten Bytes aus dem Zwischenspeicher (12) an deren Adressen im dritten Schreib-/Lesespeicher (17) das geänderte, aus dem Computerprogramm (X₁) hervorgegangene neu geltende Computerprogramm (X₂) im dritten Schreib-/Lesespeicher (17) aufweist.

7. Anordnung nach Anspruch 6, dadurch gekennzeichnet, dass die Computeranordnung (8) einen unverlierbaren Speicher (16) mit einem eingeschriebenen Basis-Programm (X₀) aufweist und dass die Computeranordnung (8) nach einem Verlust des Speicherinhalts des dritten Schreib-/Lesespeichers (17) zum Kopieren des Basis-Programms (X₀) in den dritten Schreib-/Lesespeicher (17) als Computerprogramm (X₁) eingerichtet ist.

8. Anordnung nach Anspruch 6, dadurch gekennzeichnet, dass die drei Schreib-/Lesespeicher (12; 13; 17) Teile eines einzigen gemeinsamen Schreib-/Lesespeichers sind.

9. Anordnung nach einem der Ansprüche 6 bis 8, dadurch gekennzeichnet, dass die Geräte (1; 2; 3; 4; 5) Telephonkassierstationen, die Zentraleinheit (6) eine gemeinsame Telephonzentrale und das Uebertragungsnetz (7) ein Telephonnetz sind.

## Claims

1. A method of changing a computer program (X₁) which is stored in a computer arrangement (8) of an apparatus (1) into a changed computer program (X₂), wherein both computer programs (X₁, X₂) are drawn up in the same machine language and serve for operation of the computer arrangement (8) and wherein at respective different times a respectively associated source version (Q₁ and Q₂) of the two computer programs (X₁, X₂) is produced in a central unit (6) and converted by means of a computer arrangement of the central unit into the associated machine-language computer program (X₁ and X₂ respectively) of the apparatus (1), characterised in that all bytes of the coputer program (X₁) which has not yet been changed are stored in a write/read memory (17) of the computer arrangement (8) of the apparatus (1), that of the content of the changed computer program (X₂) only all changed bytes are transmitted by the central unit (6) to the apparatus (1), supplemented by information in respect of the addresses of the changed bytes, and that the changed bytes are stored in the write/read memory (17) of the computer arrangement (8) of the apparatus (1) at their respective co-transmitted addresses in order there to form the machine-language changed computer program (X₂), together with the bytes of the computer program (X₁) which are already present in the write/read memory (17) and which have remain unchanged.

2. A method according to claim 1 characterised in that the transmitted changed bytes and the co-transmitted addresses thereof are put into intermediate storage in a further write/read memory (12) of the computer arrangement (8) of the apparatus (1) before the changed bytes are stored at their respective addresses in the write/read memory (17) of the computer arrangement (8) of the apparatus (1).

3. A method according to claim 1 or claim 2 characterised in that the computer program (X₁) which is stored in the write/read memory (17) of the computer arrangement (8) of the apparatus (1) is already a changed computer program of a first original computer program (X_{O}) which is drawn up in the machine language.

4. A method according to claim 3 characterised in that the first machine-language computer program (X_{O}) is stored upon installation of apparatus (1) in a non-volatile memory (16) of the computer arrangement (8) of the apparatus (1) and then when the apparatus (1) is first brought into operation is transferred into the write/read memory (17) of the computer arrangement (8) of the apparatus (1).

5. A method according to claim 4 characterised in that when the apparatus (1) is first brought into operation, under instructions from a central processor (11) of the computer arrangement (8) of the apparatus (1) the first original computer program (X_{O}) which is stored in the non-volatile memory (16) is passed by way of a change-over switching device (14) to a further write/read memory (12) and is stored therein in order then to be passed by the further write/read memory (12) by way of the change-over switching device (14) which has now been switched over, to the write/read memory (17) of the computer arrangement (8) of the apparatus (1) for the purposes of storage therein.

6. An arrangement for carrying out the method according to one of claims 1 to 5 comprising a central unit (6), a transmission network (7) and a plurality of apparatuses (1; 2; 3; 4; 5) which are bidirectionally connected to the central unit (6) by way of the transmission network (7), each having a computer arrangement (8) which linked by means of connections (15; 18; 19) includes a central processor (11) and three write/read memories (12; 13; 17),
characterised in that
the third write/read memory (17) contains a computer program (X₁) which is used for operation of the computer arrangement (8) and which is drawn up in machine language,
the computer arrangement (8) is adapted at least to receive data communicated by means of the transmission network (7) from the central unit (6) and to return identification data of the computer program (X₁) stored in the third write/read memory (17) to the central unit (6), wherein the first write/read memory (12) serves at least as an intermediate memory for the received data,
the central unit (6) has means for interrogation of the identification data of the computer program (X₁) used in the third write/read memory (17) of the apparatuses (1; 2; 3; 4; 5) and means for sending the data, wherein the data include only changed bytes between the computer program (X₁) established on the basis of the identification data and the fresh computer program (X₂) and addresses of the changed bytes, and
the computer arrangement (8), after reception of the data and after setting of the changed bytes from the intermediate memory (12), at the addresses thereof in the third write/read memory (17), has the changed fresh computer program (X₂) produced from the computer program (X₁) in the third write/read memory (17).

7. An arrangement according to claim 6 characterised in that the computer arrangement (8) has a non-volatile memory (16) with a written-in base program (X₀) and that the computer arrangement (8) is adapted after a loss of the memory content of the third write/read memory (17) to copy the base program (X₀) into the third write/read memory (17) as the computer program (X₁).

8. An arrangement according to claim 6 characterised in that the three write/read memories (12; 13; 17) are parts of a single common write/read memory.

9. An arrangement according to one of claims 6 to 8 characterised in that the apparatuses (1; 2; 3; 4; 5) are telephone coin collection stations, the central unit (6) is a common telephone exchange and the transmission network (7) is a telephone network.

## Revendications

1. Procédé de modification d'un programme informatique (X₁) mémorisé dans une configuration informatique (8) d'un appareil (1), en un programme informatique modifié (X₂), où les deux programmes informatiques (X₁, X₂) sont établis dans le même langage machine et qui servent au fonctionnement de la configuration informatique (8), et où une formulation source respective (Q₁ ou Q₂) des deux programmes informatiques (X₁, X₂) est produite dans une unité centrale (6), à chaque fois, à des moments différents, et où, ladite formulation source est transformée, à l'aide d'une configuration informatique de l'unité centrale, pour devenir le programme informatique respectif (X₁ ou X₂) de l'appareil (1), établi en langage machine,
caractérisé en ce que tous les octets du programme informatique (X₁) non encore modifié sont mémorisés dans une mémoire d'écriture/lecture (17) de la configuration informatique (8) de l'appareil (1),
en ce que ne sont transmis, depuis l'unité centrale (6) jusqu'à l'appareil (1), que la totalité des octets modifiés du contenu du programme informatique modifié (X₂), en complétant par des informations concernant les adresses des octets modifiés, et
en ce que les octets modifiés sont mémorisés dans la mémoire d'écriture/lecture (17) de la configuration informatique (8) de l'appareil (1), parmi leurs adresses respectives transmises avec les octets, pour constituer, dans la mémoire d'écriture/lecture, avec les octets restés inchangés du programme informatique (X₁) et déjà présents dans la mémoire d'écriture/lecture (17), le programme informatique modifié (X₂), établi en langage machine.

2. Procédé selon la revendication 1, caractérisé en ce que les octets modifiés transmis et leurs adresses transmises avec eux sont mémorisés temporairement dans une autre mémoire d'écriture/lecture (12) de la configuration informatique (8) de l'appareil (1), avant de mémoriser les octets modifiés, parmi leurs adresses respectives, dans la mémoire d'écriture/lecture (17) de la configuration informatique (8) de l'appareil (1).

3. Procédé selon la revendication 1 ou 2, caractérisé en ce que le programme informatique (X₁) mémorisé dans la mémoire d'écriture/lecture (17) de la configuration informatique (8) de l'appareil (1) est déjà un programme informatique modifié d'un premier programme informatique d'origine (Xₒ), établi en langage machine.

4. Procédé selon la revendication 3, caractérisé en ce que le premier programme informatique d'origine (Xₒ), établi en langage machine, est mémorisé, lors d'une installation de l'appareil (1), dans une mémoire imperdable (16) de la configuration informatique (8) de l'appareil (1), et
en ce que, ensuite, lors d'une première mise en service de l'appareil (1), ledit programme est récupéré dans la mémoire d'écriture/lecture (17) de la configuration informatique (8) de l'appareil (1).

5. Procédé selon la revendication 4, caractérisé en ce que, lors de la première mise en service de l'appareil (1), le premier programme informatique d'origine (Xₒ) mémorisé dans la mémoire imperdable (16), est, piloté par un processeur central (11) de la configuration informatique (8) de l'appareil (1), acheminé, via un commutateur (14), jusqu'à une autre mémoire d'écriture/lecture (12) dans laquelle ledit programme est mémorisé, pour, ensuite, être acheminé dans la mémoire d'écriture/lecture (17) de la configuration informatique (8) de l'appareil (1), pour y être mémorisé, à partir de l'autre mémoire d'écriture/lecture (12), via le commutateur (14) à présent inversé.

6. Configuration d'exécution du procédé selon l'une quelconque des revendications 1 à 5, se composant d'une unité centrale (6), d'un réseau de transmission (7) et de plusieurs appareils (1 ; 2 ; 3 ; 4 ; 5) reliés à l'unité centrale (6), de façon bidirectionnelle via le réseau de transmission (7), chaque appareil comprenant une configuration informatique (8) qui, au moyen de connexions (15 ; 18 ; 19), comprend de façon associée un processeur central (11) et trois mémoires d'écriture/lecture (12 ; 13 ; 17),
caractérisée en ce que la troisième mémoire d'écriture/lecture (17) contient un programme informatique (X₁), établi en langage machine, utilisé pour le fonctionnement de la configuration informatique (8),
en ce que la configuration informatique (8) est agencée au moins pour la réception de données transmises au moyen du réseau de transmission (7), à partir de l'unité centrale (6), et pour le renvoi, à l'unité centrale (6), de données d'identification du programme informatique (X₁) mémorisé dans la troisième mémoire d'écriture/lecture (17), où la première mémoire d'écriture/lecture (12) sert au moins de mémoire temporaire pour les données reçues,
en ce que l'unité centrale (6) comprend des moyens pour demander des données d'identification du programme informatique (X₁) utilisé dans la troisième mémoire d'écriture/lecture (17) des appareils (1 ; 2 ; 3 ; 4 ; 5), et des moyens pour l'envoi de données, où les données ne comprennent que des octets modifiés entre le programme informatique (X₁) déterminé à l'aide des données d'identification et le programme informatique (X₂), nouvellement applicable, et des adresses des octets modifiés, et
en ce que la configuration informatique (8), après la réception des données et après l'introduction des octets modifiés, fournis à leurs adresses, dans la troisième mémoire d'écriture/lecture (17), à partir de la mémoire temporaire (12), comprend, dans la troisième mémoire d'écriture/lecture (17), le programme informatique modifié (X₂), nouvellement applicable et obtenu à partir du programme informatique (X₁).

7. Configuration selon la revendication 6, caractérisée en ce que la configuration informatique (8) comprend une mémoire imperdable (16) ayant un programme de base (Xₒ) enregistré dans cette mémoire, et
en ce que la configuration informatique (8) est agencée pour, après la perte du contenu de la troisième mémoire d'écriture/lecture (17), copier le programme de base (Xₒ) dans la troisième mémoire d'écriture/lecture (17), ledit programme de base servant de programme informatique (X₁).

8. Configuration selon la revendication 6, caractérisée en ce que les trois mémoires d'écriture/lecture (12 ; 13 ; 17) font partie d'une seule mémoire d'écriture/lecture commune.

9. Configuration selon l'une quelconque des revendications 6 à 8, caractérisée en ce que les appareils (1; 2 ; 3 ; 4 ; 5) sont des stations téléphoniques à prépaiement, en ce que l'unité centrale (6) est une centrale téléphonique commune et en ce que le réseau de transmission (7) est un réseau téléphonique.
